# EUROPEAN PATENT APPLICATION

(11) **EP 2 184 034 A1**
(43) Date of publication of application: **12.05.2010**
(21) Application number: 08739728.7
(22) Date of filing: 27.03.2008
(51) Int. Cl.: A61D 9/00, A01K 13/00, A01K 29/00

(54) **WOUND-PROTECTION WEAR FOR ANIMAL**

(30) Priority: 23.08.2007 JP 2007217113
(71) Applicant: Teijin Fibers Limited, Osaka-shi, Osaka 541-0054 (JP)
(72) Inventor: MATSUMOTO, Tomoharu, Tokyo 100-0013 (JP); KATO, Sumiyo, Tokyo 100-0013 (JP); SENDA, Miyuki, Tokyo 100-0013 (JP); YAMAGUCHI, Takeshi, Osaka-shi Osaka 541-0054 (JP)
(74) Representative: Hallybone, Huw George
(86) International application number: PCT/JP2008/056618
(87) International publication number: WO 2009/025101

(57) **Abstract**

A full body suit type wound-protection wear comprising a stretchable cloth in which at least one elongation percentage in a warp direction and a weft direction is 40% or more and at least one elastic recovery percentage of elongation in warp direction and a weft direction is 80% or more is wore on an animal, and then partially cut off if needed. The wound-protection wear for an animal thus obtained is easy to put on and take off, has appropriate tightness (giving no pain to an animal), and enables wound protection while covering various affected parts on the body of an animal. As a result, a veterinarian and an owner can effectively treat the animal.

## Description

### Technical Field

The present invention relates to a wound-protection wear for an animal for protecting affected parts by covering the affected parts such that an animal does not lick, bite and claw curative treatment parts after a veterinarian or an owner has treated the affected parts of an animal.

### Background Art

In recent years, various kinds of pet mainly including dogs and cats are raised in large numbers, and with the raising, animal hospitals that treat pets by veterinarians are increased. Additionally, a large variety of therapeutic drugs for animals and therapeutic pharmaceutical products for animals are sold in pet shops, ordinary drugstores, supermarkets and the like. Conventionally, in the case of treating affected parts such as deceases and wounds in body of pets using the therapeutic drugs for animals and therapeutic pharmaceutical products for animals, protection of the affected parts has generally been conducted by applying gauze, towel and the like cut into appropriate shape and size to a part to be treated and fixing those with a tape or wrapping the part to be treated with a bandage, thereby covering the affected parts.

However, in the conventional treatment, there are many cases that pets feel pain and feel itchy, and as a result, pets lick, bite or claw affected parts, thereby removing a tape and a bandage. Thus, a veterinarian, an owner and the like have struggled with the countermeasure.

As the countermeasure, for example, Japanese Unexamined Patent Publication JP-A10-309291 (1998) proposes that medical wear is worn around the trunk of a pet after treatment. However, there was the problem that the medical wear can protect the trunk, but feet, neck and head cannot be protected. Furthermore, there was the problem that because stretchability of the wear is small, a skin is rubbed by the wear, and a cord is troublesome to pass it through the wear.

On the other hand, JP-A 11-71 (1999) proposes a covering band that covers mainly the trunk of a pet using a stretchable fabric. However, the covering band is to mainly cover the trunk like the above-described publication, and could not deal with various parts of the body of an animal.

For the above reason, a wound-protection wear having good take off/put on, having excellent fit feeling and capable of dealing with each site of the body of an animal has been desired.

### Disclosure of the Invention

Objects of the present invention are to provide a wound-protection wear for an animal that is easy to put on and take off, gives less uncomfortable feeling to an animal and gives a comfortable fit during wearing, and a method for protecting a wound of an animal using the protection wear.

As a result of keen investigations to achieve the above objects, the present inventors have found that the objects of the present invention can be achieved when cloth having specific stretch characteristics is used in a full body suit type wound-protection wear covering the whole body.

That is, according to the present invention, there are provided:
1) A wound-protection wear for an animal constituted of stretchable cloth satisfying the following requirements:
   1) at least one elongation percentage in a warp direction and a weft direction is 40% or more, and
   2) at least one elastic recovery percentage of elongation in a warp direction and a weft direction is 80% or more; and
2) A method for protecting a wound of an animal using a wound-protection wear for an animal, comprising using a wound-protection wear for an animal, constituted of stretchable cloth and comprising a full body type wound-protection wear covering the whole body, which is partially cut off.

### Brief Description of the Drawing

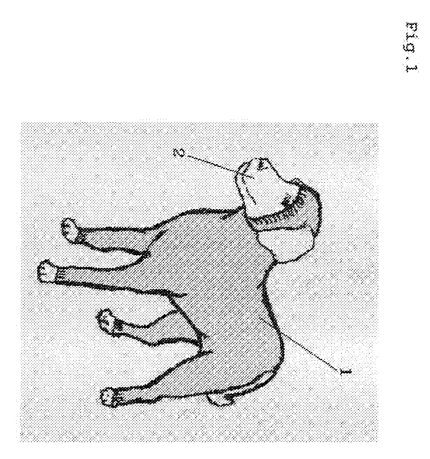

Fig. 1 is a conceptual view schematically showing the state that the wound-protection wear for an animal of the present invention was worn on a dog, and shows the state that a wound-protection wear 1 for an animal constituted of cloth having specific stretch characteristics is worn on a dog 2, and the whole body of the dog is covered with the wear except for head, ears, feet and tail, thereby protecting affected parts.

### Best Mode for Carrying Out the Invention

The embodiment of the present invention is described in detail below.

Properties of the cloth used in the present invention are that at least one elongation percentage in a warp direction and a weft direction must be 40% or more from ease of putting on and taking off a wound-protection wear for an animal and tightness (appropriate constriction). Where at least one elongation percentage is less than 40%, elongation is not sufficient, ease of take off/put on is decreased, tightness is too strong, and a skin may be injured during wearing. At least one elongation percentage of the cloth is preferably 70 to 500%, and more preferably 100 to 450%.

Furthermore, at least one elastic recovery percentage of elongation in a warp direction and a weft direction of the cloth must be 80% or more. Where at least one elastic recovery percentage of elongation is less than 80%, the cloth is stretched during repeatedly putting on and taking off, looseness is generated, and a protection wear is misaligned. As a result, the affected part cannot sufficiently be protected. The at least one elastic recovery percentage of elongation is preferably 85 to 95%.

Fiber yarn constituting the cloth can use any of natural fibers and synthetic fibers. The cloth preferably contains elastic yarn. As preferred fiber species, polytrimethylene terephthalate and polybutylene terephthalate are exemplified, and as the elastic yarn, polyurethane elastic yarn, polyester elastic yarn and polyamide elastic yarn are preferably used. Of those, polyurethane elastic yarn is preferred.

It is preferred in the present invention that clothing pressure at each body site covered with the protection wear is optimized in reducing discomfort feeling and feeling of dislike when an animal wore, increasing comport and preventing a protection wear from misaligning. Clothing pressure of the wound-protection wear is preferably 10 hPa or less. In the case that the clothing pressure exceeds 10 hPa, constriction is increased, and blood flow is blocked, and swelling may be generated. The clothing pressure is preferably 6 hPa or less, and more preferably 4 hPa or less.

The wound-protection wear for an animal comprising a full body type wound-protection wear covering the whole body, which is partially cut off, intended in the present invention is a protection wear as shown in Fig. 1. In other words, when unnecessary parts are cut off from a full body suit using scissors, knife and the like as needed, only upper body or lower body can be covered, and part of the body of an animal, for example, part of back or leg can be covered.

By employing the above method, if a full body suit type wound-protection wear having several kinds of size corresponding to body size of an animal is prepared, it is not necessary to change a protection method every kind of animal and every affected part, and a wound-protection wear can be produced at a low cost.

Furthermore, by appropriately cutting off a portion other than the portion covering the affected part from a full body type wound-protection wear, not only the wound-protection wear can be easy to put on and take off, but tightness is loosen to increase wearing comfort, and near cut site is pushed and affected part is treated even though wear is not taken off or put on. Thus, an advantageous method of protecting and treating wound of an animal can be provided.

The full body suit type wound-protection wear is preferably a non-sewn product. In the case that a plurality of cloths were cut and sewn to obtain a wound-protection wear, thickness of seam allowance is increased, skin is easily rubbed by the seam allowance, and the skin may be wound. Furthermore, production cost is increased, which is not preferred.

The stretchable cloth used in the present invention is preferably knitted fabric in forming a non-sewn product. As a preferred knitting method, warp knitting, Russell knitting, double Russell knitting and circular knitting can all preferably be used such that fray is not generated. Double Russell Jacguard knitting is particularly preferred.

Friction-charged electrostatic potential of the stretchable cloth is preferably 4000 V or less. Where it exceeds 4000 V, static electric charge is easy to generate, and this is not preferred in feeling of discomfort and safety aspect. The potential is more preferably 2000 V or less. The friction-charged electrostatic potential can be achieved by conducting antistatic treatment using antistatic fiber, antistatic agent or the like. Half life is preferably. 60 seconds or less. In the case of exceeding 60 seconds, static electric charge is easy to accumulate, which is not preferred in feeling of discomfort and safety aspect. Example

The present invention is described more specifically below by Example and Comparative Example. Each measurement value shown in Example is the value measured by the following methods.

### (1) Elongation percentage of knitted fabric

Measured by JIS L 1018 method, cut strip method

### (2) Elastic recovery percentage of elongation of knitted fabric

Measured by JIS L 1018 B method, cut strip method

### (3) Friction-charged electrostatic potential and half life

Conducted by JIS L 1094-1997, friction-charged electrostatic potential measurement method

### (4) Clothing pressure

Clothing pressure (wearing pressure) was measured by KAKEN method in Japan Synthetic Textile Inspection Institute Foundation. An air pack type measuring instrument was used, and mannequin of human leg and acryl rod, similar to a sectional shape and a size of each site of a dog were used as a model. Each site of a trial wear was cut off in a circular pattern, such a trial wear was put on the model, and clothing pressure was measured. The unit is indicated by hPa.

### (Example 1)

### (Preparation of protection wear of SS size for small dog (chihuahua, small Yorkshire terrier and the like))

Polyurethane elastic fiber filament yarn (22 dtex/1 filament) and covering yarn comprising the polyurethane elastic fiber filament yarn as a core yarn and nylon fiber filament multiyarn (55 dtex/40 filaments) as a covering yarn were alternately knitted, and a full body suit type wound-protection wear of SS size for a small dog (for a dog having neck size of 18 to 24 cm, such as Chihuahua and Toy poodle) was prepared by double Russell jacquard knitting machine without sewing. The wear was mainly constituted of flat-knitted fabric of 24 gauges, a shoulder part was formed into a mesh shape, and only the top of a head portion was formed into a rib state. Elongation percentage and elastic recovery percentage of elongation in a warp direction and a weft direction of the knitted fabric, clothing pressure, friction-charged electrostatic potential and half life are shown in Table 1.

Portions of head, four limbs (front and hind legs) and tail of the full body suit were cut off to prepare a body suit for protecting the trunk part, and the body suit was put on Toy poodle. The body suit did not generate fray in the cut portions, and had appropriate stretchability. Therefore, the body suit was easy to put on and take off, and was useful as a wound-protection wear for an animal without causing discomfort feeling and feeling of dislike during wearing.

### (Comparative Example 1)

A full body suit type wound-protection wear of a tubular-knitted 2 Way stretch, mesh material comprising polyester elastic yarn (84 dtex/36 filaments) and the nylon yarn used in Example 1 was prepared by cutting and sewing. Elongation percentage and elastic recovery percentage of elongation in a warp direction and a weft direction of the full body suit of knitted fabric, clothing pressure, friction-charged electrostatic potential and half life are shown in Table 1.

The full body suit was put on the same Toy poodle as in Example 1. Seam allowance at the edge was cut so as not to contact with skin. However, fray was generated after one day from wearing. Furthermore, because stretchability is small, the suit is difficult to put on and take off, and discomfort feeling and feeling of dislike during wearing were felt. Those were the problems as a wound-protection wear for an animal.

**TABLE 1**

| | | | Example 1 | Comparative Example 1 |
|---|---|---|---|---|
| Elongation percentage | Longitudinal | (Load 4.9 N) | 105 | 20 |
| (%) | | (Load 14.7 N) | 148 | 30 |
| | Lateral | (Load 4.9 N) | 271 | 40 |
| | | (Load 14.7 N) | 420 | 90 |
| Elastic recovery percentage of elongation | Longitudinal | (Load 4.9 N) | 90 | 95 |
| (%) | | (Load 14.7 N) | 89 | 93 |
| | Lateral | (Load 4.9 N) | 90 | 94 |
| | | (Load 14.7 N) | 84 | 92 |
| Friction-charged electrostatic potential | Cotton | (Longitudinal) | 2800 | 3000 |
| (V) | | (Lateral) | 2500 | 2800 |
| | Wool | (Longitudinal) | 4000 | 4000 |
| | | (Lateral) | 3800 | 4000 |
| Half life (second) | | | 56 | 65 |
| Clothing pressure (hPa) | | | 3.5 | 10.6 |

## Claims

1. A wound-protection wear for an animal comprising stretchable cloth satisfying the following requirements:
1) at least one elongation percentage in a warp direction and a weft direction is 40% or more, and
2) at least one elastic recovery percentage of elongation in a warp direction and a weft direction is 80% or more.

2. The wound-protection wear for an animal as claimed in claim 1, wherein the wound-protection wear is a full body suit type wound-protection wear covering the whole body.

3. The wound-protection wear for an animal as claimed in claim 1, wherein the wound-protection wear is a full body suit type wound-protection wear covering the whole body, which is partially cut off.

4. The wound-protection wear for an animal as claimed in any one of claims 1 to 3, wherein the cloth has friction-charged electrostatic potential of 4000 V or less and half life of 60 seconds or less.

5. The wound-protection wear for an animal as claimed in any one of claims 1 to 4, wherein the cloth contains elastic yarn.

6. The wound-protection wear for an animal as claimed in any one of claims 1 to 5, wherein the cloth is knitted fabric.

7. The wound-protection wear for an animal as claimed in claim 6, wherein the knitted fabric is warp knitting.

8. The wound-protection wear for an animal as claimed in claim 6, wherein the knitted fabric is Russell knitting.

9. The wound-protection wear for an animal as claimed in claim 6, wherein the knitted fabric is circular knitting.

10. The wound-protection wear for an animal as claimed in claim 6, wherein the knitted fabric is double Russell knitting.

11. The wound-protection wear for an animal as claimed in claim 6, wherein the knitted fabric is double Russell Jacguard knitting.

12. The wound-protection wear for an animal as claimed in any one of claims 6 to 11, wherein the knitted fabric comprises non-sewn knitted fabric.

13. The wound-protection wear for an animal as claimed in any one of claims 1 to 12, wherein clothing pressure is 10 hPa or less.

14. A method for protecting a wound of an animal using a wound-protection wear for an animal, comprising using a wound-protection wear for an animal, constituted of stretchable cloth and comprising a full body type wound-protection wear covering the whole body, which is partially cut off.
